# EUROPEAN PATENT APPLICATION

(11) **EP 1 693 736 A2**
(43) Date of publication of application: **23.08.2006**
(21) Application number: 06100323.2
(22) Date of filing: 13.01.2006
(51) Int. Cl.: G06F 3/02, G06F 1/16

(54) **Keyboards for handheld electronic devices**

(30) Priority: 17.02.2005 CN 200520002721
(71) Applicant: High Tech Computer Corp., Taoyuan (TW)
(72) Inventor: WANG, John C., Taoyuan, R.O.C. (TW)
(74) Representative: Patentanwälte Kewitz & Kollegen

(57) **Abstract**

Keyboards for handheld electronic device are provided. A keyboard for a handheld electronic device includes a main body, a plurality of function keys, and a plurality of alphabetical keys. The function keys and the alphabetical keys are disposed on the main body The alphabetical keys are disposed in a matrix comprising nine columns and a plurality of rows with the "P" key and the "O" key arranged in the same column.

## Description

### BACKGROUND

The invention relates to keyboards for handheld electronic devices, and in particular to keyboards having keys arranged in 9 columns.

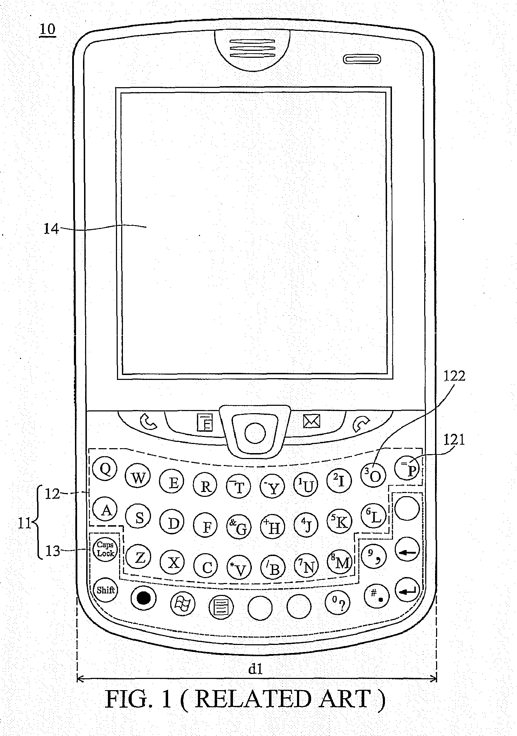

With respect to conventional keyboards for handheld electronic devices, please refer to Fig. 1. As shown in Fig. 1, a conventional handheld electronic device 10 comprises a screen 14 and a main body 11, wherein the main body 11 located below the screen 14 further comprises an alphabetical key area 12 and a function key area 13. Moreover, the alphabetical area 12 comprises a plurality of alphabetical keys and the function key area 13 comprises a plurality of function keys. The alphabetical key area 12 is arranged in accordance with QWERTY standard and all keys are arranged in a matrix of 4 rows by 10 columns. Furthermore, a width d1 represents the width of the handheld electronic device 10. The width of current PDAs on the market is about 74.5mm and the minimum width required to accommodate 10 column keys without erroneous input is about 60mm according to the experiments. With this arrangement, however, the width of the handheld electronic device cannot be further reduced. Additionally, if the interval of the keys is reduced, the unintentional contact will occur. Thus, designing a keyboard with reduced width for a handheld electronic device without altering the original key interval is of great interest to designers.

### SUMMARY

Keyboards for handheld electronic device are provided. A keyboard for a handheld electronic device includes a main body, a plurality of function keys, and a plurality of alphabetical keys wherein the function keys and the alphabetical keys are disposed on the main body and the alphabetical keys are disposed in a matrix comprising nine columns and a plurality of rows with the "P" key and the "O" key arranged in the same column.

### DESCRIPTION OF THE DRAWINGS

Keyboards for handheld electronic devices can be more fully understood by reading the subsequent detailed description and examples with references made to the accompanying drawings, wherein:
Fig. 1 is a diagram of a conventional keyboard for a handheld electronic device;
Fig. 2A is a diagram of the first embodiment of a keyboard of a handheld electronic device;
Fig. 2B is a diagram of the second embodiment of a keyboard of a handheld electronic device;
Fig. 2C is a diagram of the third embodiment of a keyboard of a handheld electronic device;
Fig. 3A is a diagram of the fourth embodiment of a keyboard of a handheld electronic device; and
Fig. 3B is a diagram of the fifth embodiment of a keyboard of a handheld electronic device.

### DETAILED DESCRIPTION

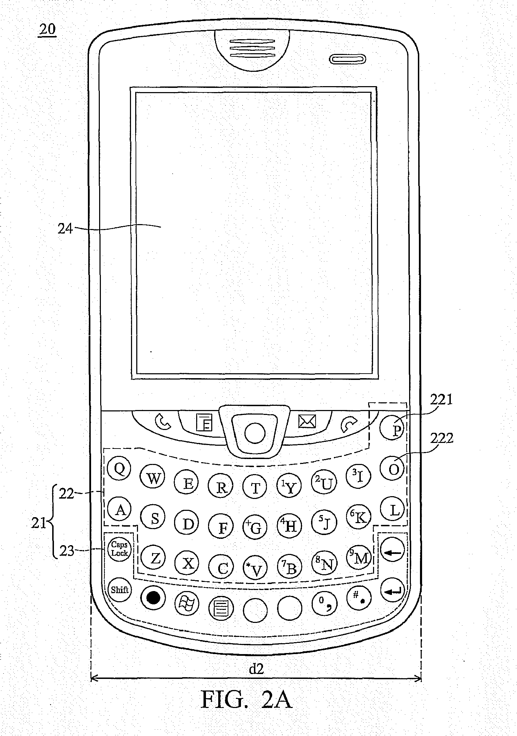

Please refer to Fig. 2A. Fig. 2A is a diagram of the first embodiment of a handheld electronic device of the invention. A handheld electronic device 20 comprises a screen 24 and a main body 21, wherein the main body 21 located below the screen 24 further comprises an alphabetical area 22 and a function key area 23. The alphabetical area 22 comprises 26 alphabetical keys from A to Z disposed on the main body 21 and the function key area 23 comprises a plurality of function keys such as "#", , ", ", ".", , " / ", "Caps Lock", "Shift" function keys disposed on the main body 21. In this embodiment, all keys are arranged in a matrix comprising 5 rows and 9 columns on the main body 21 and the "P" key 221 and the "0" key 222 are disposed in the same column. Moreover, in this embodiment, the "P" key 221 is disposed above the "0" key 222. Through this arrangement, the alphabetical area 22 of the handheld electronic device 20 is substantially arranged in accordance with the QWERTY standard. Further, the "P" key 221 is positioned on the upper right corner of the main body 21 to satisfy user's expectation.

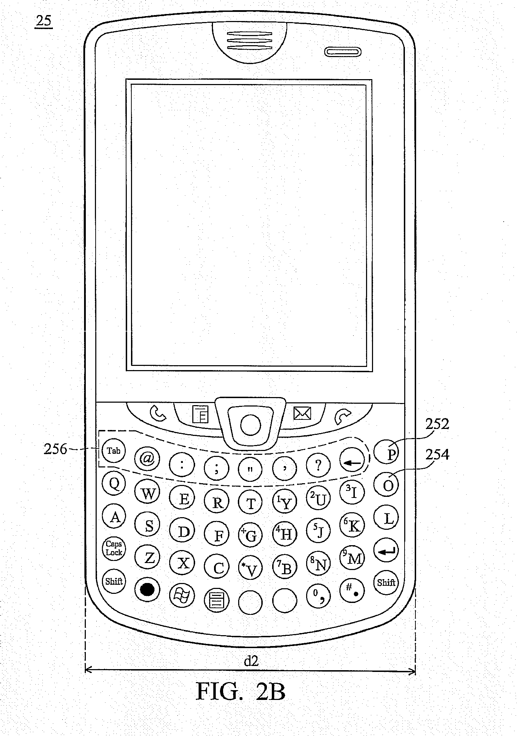

Please refer next to Fig. 2B. Fig. 2B is a diagram of the second embodiment of a handheld electronic device 25 of the invention. The arrangement of the keyboard of the handheld electronic device 25 is similar to that of the keyboard 21 of the first embodiment except an extra function area 256 disposed on the same row as the "P" key 252, wherein the "P" key 252 and the "0" key 254 are disposed in the same column and the "P" key 252 is disposed above the "0" key 254. Through this arrangement, the keyboard may possess more better visibility. Similarly, the width d2 of the handheld electronic device 20 is 55mm(60mm-5mm), that is, 5mm less than that of a conventional handheld electronic device.

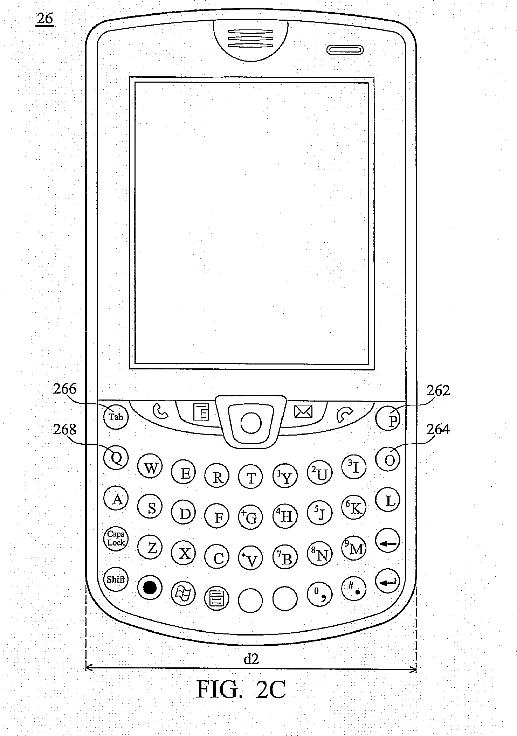

Please refer next to Fig. 2C. Fig. 2C is a diagram of the third embodiment of a handheld electronic device 26 of the invention. The arrangement of the keyboard of the handheld electronic device 26 is similar to that of the keyboard 21 of the first embodiment except a "Tab" key disposed above the "Q" key, wherein the "P" key 262 and the "0" key 264 are disposed in the same column and the "P" key 262 is disposed above the "0" key 264. Through this arrangement, the keyboard may be symmetrical.

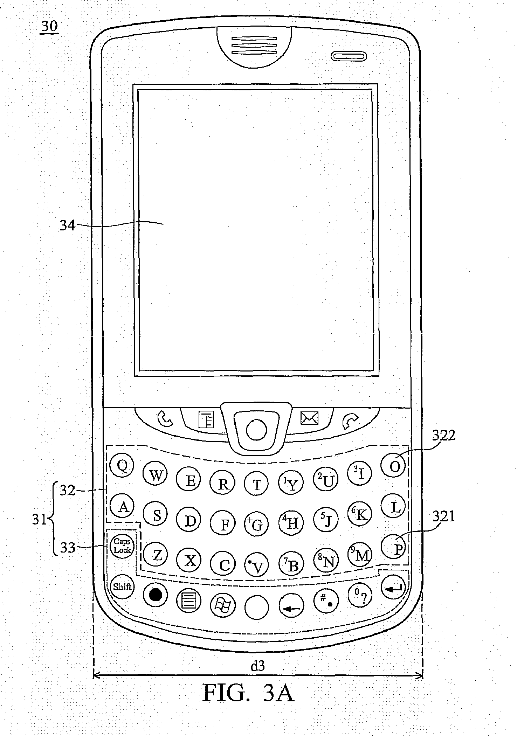

Please refer next to Fig. 3A. Fig. 3A is a diagram of the fourth embodiment of a handheld electronic device 30 of the invention. In this embodiment, a handheld electronic device 30 comprises a screen 34 and a main body 31 disposed below the screen 34, wherein all keys are arranged in a matrix comprising 4 rows and 9 columns on the main body 31. Furthermore, the main body 31 further comprises an alphabetical key area 32 and a function key area 33. Additionally, the "P" key 321 and the "O" key 322 are disposed in the same column and the "P" key 321 is disposed below the "O" key 322. Through this arrangement, the alphabetical key area 32 of the handheld electronic device 30 is substantially arranged in accordance with the QWERTY standard.

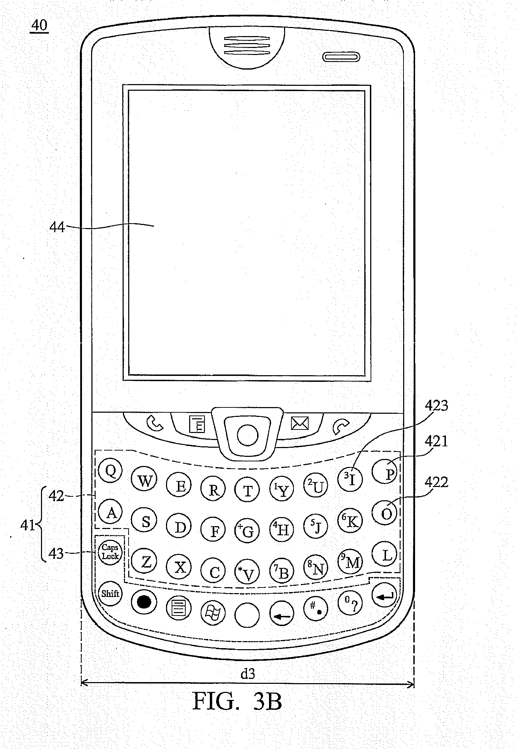

Finally, please refer to Fig. 3B. Fig. 3B is a diagram of the fifth embodiment of a handheld electronic device 40 of the invention. In this embodiment, a handheld electronic device 40 comprises a screen 44 and a main body 41 disposed below the screen 44, wherein all keys are arranged in a matrix comprising 4 rows and 9 columns on the main body 41. Furthermore, the main body 41 further comprises an alphabetical key area 42 and a function key area 43. Additionally, the "P" key 421 and the "0" key 422 are disposed in the same column and the "P" key 421 is disposed above the "O" key 422. Additionally, the "P" key 421 and the "I" key 423 are disposed in the same row and the "P" key 421 is next to the "I" key 423. Through this arrangement, the alphabetical key area 42 of the handheld electronic device 40 is substantially arranged in accordance with the QWERTY standard.

As previously described, the width of the inventive keyboard for the handheld electronic device can be reduced.

While the invention has been described by way of example and in terms of preferred embodiment, it is to be understood that the invention is not limited thereto. To the contrary, it is intended to cover various modifications and similar arrangements (as would be apparent to those skilled in the art). Therefore, the scope of the appended claims should be accorded the broadest interpretation so as to encompass all such modifications and similar arrangements.

## Claims

1. A keyboard for a handheld electronic device, comprising:
a main body;
a plurality of function keys disposed on the main body; and
a plurality of alphabetical keys disposed in a matrix comprising nine columns and a plurality of rows on the main body, wherein the "P" key and the "0" key of the alphabetical keys are arranged in the same column.

2. The keyboard as claimed in claim 1, wherein the "P" key is disposed above the "0" key, the "P" key and the "I" key are disposed on the same row and the "P" key is next to the "I" key.

3. The keyboard as claimed in claim 1, wherein the "P" key is disposed below the "O" key.

4. The keyboard as claimed in any of the preceding claims, wherein the alphabetical keys are arranged substantially in accordance with QWERTY standard.

5. A handheld electronic device, comprising:
a screen; and
a main body located below the screen, wherein the main body comprises 26 alphabetical keys from A to Z arranged in 9 columns.

6. The handheld electronic device as claimed in claim 5, wherein the "P" key and the "O" key are located in the same column.

7. The handheld electronic device as claimed in claim 5 or 6, wherein the "P" key is disposed above the "0" key, and the "P" key is adjacent to the "I" key.

8. The handheld electronic device as claimed in claim 7, wherein the main body further comprises a plurality of function keys, the alphabetical keys and the function keys are arranged in a matrix comprising 9 columns and 5 rows, and the function keys comprise a first function key area located below the alphabetical keys and a second function key area located in the same row as the "P" key.

9. The handheld electronic device as claimed in claim 7 or 8, wherein the main body further comprises a plurality of function keys having at least one function key located in the same column as the "Q" key and above the "Q" key, and the at least one function key is "Tab" key.

10. The handheld electronic device as claimed in claim 6, wherein the "P" key is disposed below the "0" key.

11. The handheld electronic device as claimed in claim 7 or 10, wherein the alphabetical keys are arranged substantially in accordance with the QWERTY standard.

12. A handheld electronic device, comprising 26 alphabetical keys from A to Z arranged in 9 columns, wherein the alphabetical keys are arranged substantially in accordance with the QWERTY standard.

13. The handheld electronic device as claimed in claim 12, wherein the "P" key and the "0" key are disposed in the same column.

14. The handheld electronic device as claimed in claim 13, wherein the "P" key is disposed above the "O" key and the "P" key is adjacent to the "I" key.

15. The handheld electronic device as claimed in claim 14, wherein the "P" key is disposed below the "O" key.
